(19) Europäisches Patentamt
European Patent Office
Office européen des brevets

(11) **EP 2 227 316 B1**

(12) # FASCICULE DE BREVET EUROPEEN

(45) Date de publication et mention de la délivrance du brevet:
**13.11.2013 Bulletin 2013/46**

(21) Numéro de dépôt: **08869375.9**

(22) Date de dépôt: **19.12.2008**

(51) Int Cl.:
***B01F 17/00*** (2006.01)
***C09D 17/00*** (2006.01)
***C09D 5/02*** (2006.01)
***C09B 67/18*** (2006.01)
***C09D 7/02*** (2006.01)
***C09D 7/12*** (2006.01)
***C09D 133/02*** (2006.01)

(86) Numéro de dépôt international:
**PCT/FR2008/052383**

(87) Numéro de publication internationale:
**WO 2009/087330 (16.07.2009 Gazette 2009/29)**

(54) **AGENT DE NEUTRALISATION ET DE CO-DISPERSION A FORT POUVOIR DE DEVELOPPEMENT DE LA FORCE COLORANTE, ET LES PEINTURES ET CONCENTRES PIGMENTAIRES LE CONTENANT**

NEUTRALISIERUNGS- UND CO-DISPERSIONSMITTEL MIT HOHER FÄRBEKRAFTVERSTÄRKUNG SOWIE LACKE UND PIGMENTKONZENTRATE DAMIT

NEUTRALISATION AND CO-DISPERSION AGENT HAVING A HIGH COLOURING-POWER ENHANCEMENT CAPACITY, AND PAINTS AND PIGMENT CONCENTRATES CONTAINING SAME

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **04.01.2008 FR 0850053**

(43) Date de publication de la demande:
**15.09.2010 Bulletin 2010/37**

(73) Titulaire: **ARKEMA FRANCE**
**92700 Colombes (FR)**

(72) Inventeurs:
- **VAN HEMELRYCK, Bruno**
**F-69630 Chaponost (FR)**
- **RUPPIN, Christophe**
**F-73250 StPierre d'Albigny (FR)**

(56) Documents cités:
**EP-A- 0 863 170**
**US-A- 5 279 664**
**US-A- 5 959 001**

- **COPE A C ET AL: "SYNTHESIS OF 2-ALKYLAMINOETHANOLS FROM ETHANOLAMINE" JOURNAL OF THE AMERICAN CHEMICAL SOCIETY, US, vol. 64, no. 7, 1 juillet 1942 (1942-07-01), pages 1503-1506, XP001088768 ISSN: 0002-7863**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 227 316 B1

## Description

La présente invention concerne les peintures, qu'elles soient aqueuses ou solvantées.

Dans les peintures aqueuses, telles que les peintures latex sur base acrylique, un ajustement de pH est généralement nécessaire afin de stabiliser le latex. Cet ajustement est appelé neutralisation. Par ailleurs, lorsque l'on dilue un concentré pigmentaire dans une peinture blanche ou base blanche, qu'elle soit aqueuse ou solvantée, il est également nécessaire de neutraliser ces concentrés pigmentaires.

En outre, le développement de la couleur dans une base blanche est toujours l'objet d'une optimisation de l'intensité de la couleur désirée dans un souci de moindre coût.

L'usage d'un dispersant primaire polymère (tel que Coatex® P90 de la société Coatex ou Dysperbyk® 191 ou BYK® 192 de la société BYK-Chemie GmbH, ou Orotan™ 850ER de la société Rohm & Haas), afin de disperser de grandes quantités de pigments dans les concentrés (ou pâtes) pigmentaires, peut nécessiter le recours à des additifs présentant une action de co-dispersion importante afin de réduire la quantité de dispersant primaire généralement coûteux.

Certains neutralisants, tels que, parmi les plus usuels, l'ammoniac, la soude, la diméthylamine, la monoéthanolamine, la diéthanolamine, et la N-méthyléthanolamine, sont sans action sur l'expression de la couleur des pigments organiques ou minéraux.

Un autre neutralisant connu, le 2-amino-2-méthyl-1-propanol (CAS N°124-68-5), commercialisé sous la marque AMP® à 90 ou 95% dans l'eau sous les noms AMP® 90 et AMP® 95 respectivement, par la société Angus, présente une amélioration dans l'action neutralisante en favorisant la stabilité des latex ou concentrés pigmentaires par une co-dispersion des pigments qui renforce le rôle du dispersant primaire.

Typiquement, le pH d'un latex est idéalement ajusté à une valeur comprise entre 8 et 10, de préférence entre 8,5 et 9,5 lorsque l'amine neutralisante (amine d'ajustement) est ajoutée dans une proportion de 0,1 à 0,5% en poids de préférence de 0,1 à 0,3%, préférentiellement encore de 0,1 à 0,2%. Dans les concentrés pigmentaires, la quantité de co-dispersant amine est, de préférence, maintenue au-dessous de 3,5% en poids.

L'AMP® 90 permet donc de répondre à ces conditions, améliorant l'action neutralisante et la réduction du dispersant primaire, mais ne résout pas le problème posé de bon développement de la couleur. US 5959001 décrit des compositions pigmentaires pour colorer des polyuréthanes, comprenant une amine, le plus souvent hydroxylée, de poids moléculaire inférieur ou égal à 500 g/mol.

Ainsi, un premier objectif de l'invention est de proposer un agent de neutralisation et de co-dispersion, notamment pour peintures aqueuses ou solvantées ou pour concentrés pigmentaires pour la préparation desdites peintures, présentant une force colorante accrue par rapport aux agents de neutralisation et de co-dispersion connus jusqu'à ce jour. D'autres objectifs apparaîtront dans la description de l'invention qui suit.

Ces objectifs sont atteints en partie ou en totalité, grâce aux travaux de recherches effectués par la Société déposante.

Ainsi, la présente invention a tout d'abord pour objet l'utilisation, comme agent de neutralisation et/ou de co-dispersion dans une peinture et/ou comme agent de développement de la force colorante de pigment(s) dans une base de peinture blanche que l'on souhaite teinter, d'au moins une amine secondaire ou tertiaire hydroxylée de formule (1) :

$$R^3-N(R^1)-R^2 \quad (1)$$

dans laquelle, $R^1$, $R^2$ et $R^3$, identiques ou différents, sont choisis parmi l'atome d'hydrogène, un radical alkyle linéaire ou ramifié comprenant de 1 à 12 atomes de carbone et un radical hydroxy-alkyle linéaire comprenant de 1 à 6 atomes de carbone,
étant entendu que :

- au plus un des $R^1$, $R^2$ et $R^3$ représente l'atome d'hydrogène,
- au moins un des $R^1$, $R^2$ et $R^3$ comporte un groupement hydroxyle (-OH), et
- au moins un des $R^1$, $R^2$ et $R^3$ comporte au moins une ramification en position $\alpha$ (« alpha ») de l'atome d'azote.

Par ramification en position $\alpha$ (« alpha ») de l'atome d'azote, on entend que l'atome de carbone directement lié à l'atome d'azote est en outre lié à deux autres atomes de carbone.

Par « radical hydroxy-alkyle linéaire comprenant de 1 à 6 atomes de carbone », on entend un radical alkyle linéaire comprenant de 1 à 6 atomes de carbone, substitué en position terminale (i.e. position $\omega$ par rapport à l'atome

de carbone lié à l'atome d'azote présent dans le composé de formule (1)) par un groupement hydroxy.

On préfère plus particulièrement un radical hydroxy-alkyle linéaire choisi parmi hydroxyméthyle, 2-hydroxyéthyle, 3-hydroxy-n-propyle, 4-hydroxy-n-butyle, 5-hydroxy-n-pentyle et 6-hydroxy-n-hexyle, et de préférence encore, le radical hydroxy-alkyle est choisi parmi hydroxyméthyle, 2-hydroxyéthyle et 3-hydroxy-n-propyle, le radical 2-hydroxyéthyle étant tout particulièrement préféré.

Selon un mode de réalisation, on préfère les amines de formule (1) dans lesquelles $R^1$ représente l'atome d'hydrogène et $R^2$ et $R^3$, identiques ou différents, sont choisis parmi un radical alkyle linéaire ou ramifié comprenant de 1 à 12 atomes de carbone et un radical hydroxy-alkyle linéaire comprenant de 1 à 6 atomes de carbone, étant entendu que :

- au moins un des $R^2$ et $R^3$ comporte un groupement hydroxyle (-OH), et
- au moins un des $R^2$ et $R^3$ comporte au moins une ramification en position $\alpha$ (« alpha ») de l'atome d'azote.

Selon un autre mode de réalisation de la présente invention, on préfère les amines de formule (1) dans lesquelles chaque radical alkyle comporte de 3 à 10 atomes de carbone, de préférence de 3 à 8 atomes de carbone.

Selon encore un autre mode de réalisation préféré de la présente invention, le radical porteur d'un groupement hydroxyle comporte 2 ou 3, de préférence encore 2, atomes de carbone.

Selon un aspect tout particulièrement préféré, la présente invention concerne l'utilisation précitée d'une amine de formule (1) dans laquelle :

$R^1$ représente l'atome d'hydrogène et
$R^2$ et $R^3$, identiques ou différents, sont choisis parmi un radical alkyle linéaire ou ramifié comprenant de 3 à 8 atomes de carbone, et un radical hydroxy-alkyle linéaire comprenant 2 ou 3, de préférence 2, atomes de carbone,
étant entendu que :

- au moins un des $R^2$ et $R^3$ comporte un groupement hydroxyle (-OH), et
- au moins un des $R^2$ et $R^3$ comporte au moins une ramification en position $\alpha$ (« alpha ») de l'atome d'azote.

On préfère tout particulièrement l'utilisation d'au moins une amine choisie parmi :

- la N-(1-méthylpropyl)-N-(2-hydroxyéthyl)amine ;
- la N-(1,3-diméthylbutyl)-N-(2-hydroxyéthyl)amine; et
- la N-(1-éthyl-3-méthylpentyl)-N-(2-hydroxyéthyl)amine ;

Les amines de formule (1) sont soit disponibles dans le commerce, soit connues, soit encore obtenues selon des procédés de synthèse connus de l'homme du métier, directement ou par adaptations simples, et qui sont décrits dans la littérature scientifique, la littérature brevets, les « Chemical Abstracts », ou par les bases de données en ligne ou encore l'Internet.

Par exemple, les amines de formule (1) peuvent aisément être obtenues par amination réductrice d'une cétone ou d'un aldéhyde par une amine primaire ou une hydroxy-alkylamine primaire.

Ainsi, la présente invention concerne l'utilisation, comme agent de neutralisation et/ou de co-dispersion dans une peinture et/ou comme agent de développement de la force colorante de pigment(s) dans une base de peinture blanche que l'on souhaite teinter, d'au moins une amine de formule (1) telle que définie ci-dessus.

La peinture peut être une peinture aqueuse, telle qu'une peinture latex sur une base acrylique, ou encore une peinture solvantée, telle qu'une peinture alkyde ou glycérophtalique.

Les amines de formule (1) trouvent une utilisation tout particulièrement intéressante dans le cas de peintures pigmentées, notamment dans le cas où le ou les pigments sont introduits dans la formulation par dilution d'un concentré pigmentaire dans une base de peinture blanche.

En effet, il a été découvert de manière surprenante que la présence d'au moins une amine de formule (1), dans la peinture, voire dans le concentré pigmentaire, ou encore à la fois dans la base de la peinture dite « base blanche » et dans le concentré pigmentaire, permet d'augmenter de manière substantielle la force colorante (expression de la couleur) du ou desdits pigments.

En d'autres termes, la présence d'au moins une amine de formule (1) dans la peinture, la base blanche et/ou dans le concentré pigmentaire peut permettre de diminuer la quantité de pigments qui aurait été nécessaire pour obtenir la même force colorante dans ladite peinture ou dans ledit concentré pigmentaire qui ne contiendrait pas d'amine de formule (1).

La présente invention a également pour objet un concentré pigmentaire comprenant au moins une amine de formule (1) telle que définie plus haut. Le concentré pigmentaire de l'invention comprend en outre généralement un

dispersant primaire, un ou plusieurs pigments, de l'eau et un ou plusieurs additifs et adjuvants usuels.

Le concentré pigmentaire de l'invention peut avantageusement être destiné à teinter une base de peinture blanche, aqueuse ou solvantée.

Le concentré pigmentaire peut également comprendre un ou plusieurs autres agents de neutralisation, notamment choisi(s) parmi ceux habituellement utilisés et connus de l'homme du métier, et notamment ceux choisis parmi l'ammoniaque, l'hydroxyde de sodium, la diméthylamine, la monoéthanolamine, la diéthanolamine, la N-méthyléthanolamine, le 2-amino-2-méthyl-1-propanol, et le 2-n-butylaminoéthanol.

Ledit concentré pigmentaire peut avantageusement comprendre de 0,05 à 10% en poids d'au moins une amine de formule (1), et, lorsqu'elle(s) est(sont) utilisée(s) en mélange avec au moins un autre agent de neutralisation, elle(s) représente(nt) avantageusement au moins 1 % en poids, de préférence au moins 50% en poids dudit mélange (totalité des agents de neutralisation).

Un autre avantage lié à l'utilisation d'au moins une amine de formule (1) dans le concentré pigmentaire réside dans le fait que l'on peut régler la quantité de dispersant primaire entrant dans la formulation du concentré pigmentaire en tenant compte du rôle dispersant de la ou des amines de formule (1) définie précédemment.

De même, on peut régler avantageusement la quantité de concentré pigmentaire devant teinter la peinture blanche en tenant compte du pouvoir à favoriser un développement élevé de la force colorante de la ou des amines de formule (1) définie précédemment.

Selon un autre aspect, la présente invention a également pour objet une peinture aqueuse ou solvantée caractérisée par le fait qu'elle comprend au moins une amine de formule (1) telle que définie précédemment comme agent de neutralisation et/ou agent de co-dispersion dans la peinture et/ou comme agent de développement de la force colorante de pigment(s).

Les peintures aqueuses ou solvantées, teintées ou non, selon la présente invention trouvent une utilisation tout particulièrement avantageuse comme produits de revêtement de surfaces, de murs et autres surfaces architecturales, qu'elles soient intérieures ou extérieures.

Avantageusement, la peinture selon l'invention peut contenir de 0,05 à 2% en poids, de façon préférée de 0,1 à 0,5% en poids, et de façon encore plus préférée de 0,1 à 0,2% en poids d'au moins une amine de formule (1).

La ou les amines de formule (1) peu(ven)t être le(s) seul(s) agent(s) de neutralisation de la formulation de peinture ou encore la peinture peut comprendre au moins un autre agent de neutralisation choisi parmi ceux habituellement utilisés et connus de l'homme du métier, et notamment parmi l'ammoniaque, l'hydroxyde de sodium, la diméthylamine, la monoéthanolamine, la diéthanolamine, la N-méthyléthanolamine, le 2-amino-2-méthyl-1-propanol, et le 2-n-butylaminoéthanol.

De préférence, la ou les amine(s) de formule (1) représente(nt) au moins 1 % du mélange d'agents de neutralisation, de façon encore davantage préférée au moins 50% en poids du mélange des agents de neutralisation.

La présente invention a également pour objet une peinture teintée, caractérisée par le fait qu'elle a été obtenue par dilution d'un concentré pigmentaire (CP1) comprenant pour 100 parties en poids :

- de 1 à 4 parties en poids d'au moins une amine de formule (1) telle que définie *supra ;*
- de 20 à 50 parties en poids d'au moins un pigment ou colorant ;
- de 40 à 70 parties en poids d'eau ;
- de 1 à 10 parties en poids d'un retardateur de séchage, tel que le polyéthylène glycol 200 ; et
- de 0,1 à 0,8 parties en poids des additifs et adjuvants usuels, tels qu'anti-mousse et biocide ;

dans une base de peinture aqueuse blanche mate (PM1) comprenant pour 1000 parties en poids :

- de 80 à 150 parties en poids d'eau d'ajout ;
- de 1 à 2 parties en poids d'au moins un agent dispersant ;
- de 1 à 3 parties en poids d'au moins un agent de neutralisation ;
- de 80 à 150 parties en poids de pigment blanc, par exemple le dioxyde de titane ($TiO_2$) ;
- de 400 à 550 parties en poids d'au moins un autre pigment blanc ;
- de 100 à 200 parties en poids d'au moins un liant tel qu'une émulsion acrylique, une résine acrylique ;
- de 150 à 250 parties en poids d'au moins un épaississant tel qu'un éther cellulosique ; et
- de 2 à 5 parties en poids des additifs et adjuvants usuels, tels qu'anti-mousse, agent de coalescence et biocide.

Selon un autre aspect, la présente invention a également pour objet une peinture teintée, caractérisée par le fait qu'elle a été obtenue par dilution du concentré pigmentaire (CP1) défini plus haut dans une peinture aqueuse blanche satinée (PS1) comprenant pour 1000 parties en poids :

- de 70 à 150 parties en poids d'eau d'ajout ;

- de 1 à 3 parties en poids d'au moins un agent dispersant ;
- de 1 à 2 parties en poids d'au moins un agent de neutralisation ;
- de 80 à 300 parties en poids de pigment blanc, par exemple le dioxyde de titane ($TiO_2$) ;
- de 40 à 90 parties en poids d'au moins un autre pigment blanc ;
- de 400 à 550 parties en poids d'au moins un liant tel qu'une émulsion acrylique, une résine acrylique ;
- de 4 à 20 parties en poids d'au moins un épaississant; et
- de 10 à 40 parties en poids des additifs et adjuvants usuels, tels qu'anti-mousse, agent de coalescence et biocide.

Selon encore un autre aspect, la présente invention a également pour objet une peinture teintée, caractérisée par le fait qu'elle a été obtenue par dilution du concentré pigmentaire (CP1) défini plus haut dans une peinture aqueuse blanche pour façade (PF1) comprenant pour 1000 parties en poids :

- de 80 à 150 parties en poids d'eau d'ajout ;
- de 200 à 250 parties en poids d'au moins un liant tel qu'une résine acrylique ;
- de 1 à 3 parties en poids d'au moins un agent dispersant ;
- de 1 à 3 parties en poids d'au moins un agent de neutralisation ;
- de 160 à 250 parties en poids de pigment blanc, par exemple le dioxyde de titane ($TiO_2$) ;
- de 300 à 400 parties en poids d'au moins un autre pigment blanc ;
- de 120 à 200 parties en poids d'au moins un épaississant tel qu'un éther cellulosique ; et
- de 2 à 5 parties en poids des additifs et adjuvants usuels, tels qu'anti-mousse et biocide.

Selon encore un autre aspect, la présente invention a également pour objet une peinture teintée, caractérisée par le fait qu'elle a été obtenue par dilution du concentré pigmentaire (CP1) défini plus haut dans une base de peinture solvantée blanche ($P_{Solv}$), comprenant pour 1000 parties en poids :

- de 500 à 650 parties en poids d'une résine alkyde ;
- de 230 à 350 parties en poids d'au moins un pigment blanc ;
- de 4 à 8 parties en poids d'au moins un agent mouillant ;
- de 15 à 25 parties en poids d'au moins un siccatif ;
- de 6 à 10 parties en poids des additifs et adjuvants usuels, tels qu'agents antisédimentation et agents anti-peau ; et
- de 80 à 120 parties en poids d'un solvant hydrocarbure, tel que par exemple le white-spirit.

Dans chacune des peintures décrites ci-dessus, le concentré pigmentaire représente généralement entre 0,1 et 8% en poids de la peinture résultante.

L'utilisation d'au moins une amine de formule (1) telle que décrite *supra* dans un concentré pigmentaire, ou une peinture aqueuse ou solvantée, permet de mettre en évidence une ou plusieurs des caractéristiques suivantes :

(1) lorsque l'AMP® 90, utilisé en agent de neutralisation et/ou agent de co-dispersion dans les peintures aqueuses, à une teneur dans un latex de 0,1 à 0,5% et préférablement 0,1 à 0,2%, pour un ajustement de pH idéal compris entre 8 et 10, de préférence entre 8,5 et 9,5, est remplacé poids pour poids par au moins une amine de formule (1), la force colorante est plus élevée, avec un $\Delta E$ d'au moins une unité d'écart relatif avec la référence à l'AMP®-90 (AMP®-90 dans le concentré pigmentaire et la base blanche) ;
(2) grâce à son pouvoir de développement de la force colorante supérieur, une amine de formule (1) peut permettre non seulement de réduire la quantité de dispersant primaire d'un facteur au moins 4 dans les concentrés pigmentaires mais également de diminuer d'au moins 10% la quantité de concentré pigmentaire devant teinter une base blanche aqueuse ;
(3) la substitution d'AMP® 90 par au moins une amine de formule (1) n'est pas limitée à l'application aux peintures de type latex, mais peut également s'appliquer aux peintures de type alkyde, tout en offrant un meilleur pouvoir dispersant et un meilleur pouvoir de développement de la force colorante ;
(4) la substitution d'AMP® 90 par au moins une amine de formule (1) n'exclut pas l'usage conjoint d'un ou de plusieurs autres agents de neutralisation tels qu'ils ont été définis précédemment, dont l'AMP®90 elle-même, avec toutefois une proportion minimale de la ou des amine(s) de formule (1) (au moins 1 %) pour bénéficier des avantages décrits ;
(5) le phénomène est notamment observé pour les pigments connus pour être difficiles à disperser, tels que les bleus de phtalocyanine.

Les exemples suivants illustrent la présente invention sans toutefois en limiter la portée. Dans ces exemples, les parties et les pourcentages sont en poids, sauf indication contraire.

**Exemple de préparation A : Préparation des concentrés pigmentaires**

On prépare, selon les méthodes connues de l'homme du métier, trois (3) différents concentrés pigmentaires (CP) ayant les formulations indiquées dans le Tableau 1 ci-après et nommés $CP_{AM}$, $CP_{AD}$ et $CP_{SB}$, de couleur bleue (pigment bleu phtalocyanine).

-- Tableau 1 --

| Formulation des concentrés pigmentaires (quantités indiquées en parties en poids) | | | | |
|---|---|---|---|---|
| Constituants | | $CP_{AM}$ | $CP_{AD}$ | $CP_{SB}$ |
| Eau | | 62,97 | 62,97 | 62,97 |
| Agent neutralisant | 2-amino-2-'méthyl-1-propanol(1) | 2,1 | - | - |
| | 2-n-butylaminoéthanol(2) | - | 2,1 | - |
| | N-(1-méthylpropyl)-N-(2-hydroxy-éthyl)amine(3) | - | - | 2,1 |
| Agent dispersant primaire(4) | | 2,1 | 2,1 | 2,1 |
| Pigment bleu(5) | | 27,98 | 27,98 | 27,98 |
| Anti-mousse(6) | | 0,35 | 0,35 | 0,35 |
| Biocide(7) | | 0,07 | 0,07 | 0,07 |
| Retardateur de séchage polyéthylène glycol 200 | | 2,83 | 2,83 | 2,83 |
| Agent épaississant(8) | | 1,6 | 1,6 | 1,6 |

(1) Agent neutralisant commercialisé par la Société « ANGUS » sous la marque « AMP® 90 » (CAS N° 124-68-5) ne possédant pas de ramification sur l'un ou l'autre des atomes de carbone en $\alpha$ de l'azote (exemple comparatif). Cet agent neutralisant est introduit dans la formulation sous la forme à 90% dans l'eau, cette quantité d'eau n'étant pas comptée dans les 47 parties en poids d'eau d'ajout de la formulation ;
(2) Agent neutralisant ne possédant pas de ramification sur l'un ou l'autre des atomes de carbone en $\alpha$ de l'azote (exemple comparatif) (CAS N° 111-75-1) ;
(3) Agent neutralisant de formule (1) selon l'invention (CAS N° 35265-04-4) ;
(4) Agent dispersant primaire commercialisé par la Société « BYK-CHEMIE » sous la marque « DISPERBYK 191 » ;
(5) Pigment phtalo bleu 15:2, tel que celui commercialisé par la Société « CLARIANT » sous la dénomination « BLEU BT 627 D »
(6) Anti-mousse commercialisé par la Société « CIBA SPECIALTY CHEMICALS » sous la dénomination « EFKA 2526 » ;
(7) Biocide commercialisé par la Société « THOR » sous la dénomination « ACTICIDE MBS » ;
(8) Agent épaississant commercialisé par la Société « DEGUSSA » sous la dénomination « VISCOPLUS 3030 10% » à 50% dans l'eau.

Le concentré pigmentaire $CP_{AM}$ est obtenu avec beaucoup de mousse et un aspect granuleux. Le concentré pigmentaire $CP_{AD}$ présente également un peu de mousse. Au contraire, le concentré pigmentaire $CP_{SB}$ (selon l'invention) présente un bel aspect, sans aucune formation de mousse.

Pour préparer chacun de ces concentrés pigmentaires, on a réalisé le broyage du pigment dans un broyeur à billes de diamètre 1,5 mm, en présence de l'eau, du dispersant primaire, de l'agent neutralisant, de l'anti-mousse, à 1000 tours/minute pendant 1 h30. La taille des particules est contrôlée à l'aide d'une jauge North et choisie à 10 $\mu$m. Le biocide, le retardateur de séchage PEG200 et l'éventuel épaississant sont ajoutés à la fin du temps de broyage.

**Exemple de préparation B : Préparation des bases blanches de peintures mates**

On prépare trois bases blanches de peintures BBP1, BBP2 et BBP3, de 952 g chacune. Chaque constituant de la peinture est introduit dans des proportions contrôlées. Les compositions des peintures sont reproduites dans le tableau 2 suivant :

-- Tableau 2 --

| *Constituants* | *Parties en poids* |
|---|---|
| Eau d'ajout | 110 |
| Anti-mousse commercialisé sous la dénomination « Tego Foamex 7447 » par la société Tego Chemie | 2 |
| Agent dispersant polyacrylate commercialisé sous la dénomination « Coatex P90 » par la Société Coatex | 2 |
| Agent neutralisant :<br>• **Pour BBP1 :** commercialisé sous la marque « AMP® 90 » par la Société Angus constitué par une solution à 90% dans l'eau de 2-amino-2-méthyl-1-propanol (exemple comparatif ; CAS N° 124-68-5)<br>• **Pour BBP2 :** 2-n-butylaminoéthanol (exemple comparatif ; CAS N° 111-75-1)<br>• **Pour BBP3 :** N-(1-méthylpropyl)-N-(2-hydroxyéthyl)amine selon l'invention (CAS N° 35265-04-4) | 2 |
| Biocide commercialisé par la Société Thor sous la dénomination « Acticide MBS » | 1 |
| Pigment blanc commercialisé sous la dénomination « Tiona 595 » par la société Millenium | 90 |
| Talc d'une dimension moyenne de particule de 20 μm, commercialisé par la Société « TALC LUZENAC » | 60 |
| Carbonate de calcium commercialisé sous la dénomination « MIKHART 2 » par la Société « PROVENCALE » | 160 |
| Carbonate de calcium commercialisé sous la dénomination « MIKHART 5 » par la Société « PROVENCALE » | 250 |
| Liant à base de Résine acrylique commercialisé sous la denomination « Craymul 2132 » par la société Cray Valley | 100 |
| Agent de coalescence commercialisé sous la dénomination « Texanol » par la société Eastman | 5 |
| Épaississant cellulosique commercialisé sous la dénomination « Natrosol 330PA 2% » par la société Hercules/Aqualon | 170 |
| Total | 952 |

Les trois bases blanches BBP1 (avec agent de neutralisation AMP® 90), BBP2 (avec agent de neutralisation 2-n-butylaminoéthanol) et BBP3 (avec agent de neutralisation N-(1-méthylpropyl)-N-(2-hydroxyéthyl)amine selon l'invention) sont préparées en mélangeant les divers constituants présentés dans le Tableau 2 ci-dessus, dans les proportions indiquées, selon les techniques connues de l'homme du métier pour la formulation des latex.

On mélange tout d'abord l'eau, l'anti-mousse, le dispersant, l'agent neutralisant et l'anti-bactérien à 500 tours/min à l'aide d'un disperseur pendant 5 minutes. Le mélange obtenu est fluide.

On réalise ensuite « l'empattage » (étape dans laquelle sont introduites les charges), en introduisant dans le mélange obtenu précédemment les pigments et modificateurs de rhéologie et de brillance (dioxyde de titane, carbonate de calcium et talc), sous agitation à 800 tours/min, pendant 20 minutes. L'introduction des charges est réalisée lentement, et il est souvent observé un échauffement du mélange en raison des forces de cisaillement.

L'agitation est ensuite réduite à 500 tours/min pour ajouter la résine et l'agent de coalescence. La viscosité est alors éventuellement réglée par ajout d'un épaississant (type PU, cellulosique, ou poly-éther). Dans le cas où la peinture est trop épaisse, il est possible d'ajouter de l'eau. En règle générale, la viscosité doit être d'environ 4000 à 5000 mPa.s. Après réglage de la viscosité, l'ensemble est maintenu sous agitation à 500 tours/min, pendant 5 minutes.

Stabilité au stockage des bases blanches :

Les mesures de pH et de viscosité (Brookfield, Mobile 6, 100 tours/min, température ambiante) sont prises au moins 24h après la formulation, l'épaississant pouvant agir encore pendant quelque temps après la fin de la formulation. Les valeurs de pH sont équivalentes pour les 3 formulations, et sont comprises entre 9,2 et 9,3.

Après 15 jours à l'étuve à 40°C, ce qui correspond à un vieillissement d'environ 6 mois, le pH a peu diminué,

les formulations sont donc considérées comme stables.

**Exemples de l'invention et exemples comparatifs**

Mode opératoire général

On réalise les colorations des bases blanches BBP1 à BBP3 par dilution des concentrés pigmentaires $CP_{AM}$, $CP_{AD}$ et $CP_{SB}$ préparés dans l'exemple de préparation A, dans les bases blanches de peintures de l'exemple de préparation B, selon les schémas de coupage indiqués dans le Tableau 3 ci-dessous.

-- Tableau 3 --

| Schémas de coupage (dilution) | | | |
|---|---|---|---|
| **Exemple** | **Base Blanche de Peinture (Parties en Poids)** | **Concentré Pigmentaire (Parties en Poids)** | **Couleur de la Peinture Obtenue** |
| 1 (comparatif) | BBP1 (100) | $CP_{AM}$ (4) | Bleue |
| 2 (comparatif) | BBP2 (100) | $CP_{AD}$ (4) | Bleue |
| 3 (invention) | BBP3 (100) | $CP_{SB}$ (4) | Bleue |

**Tests d'opacité, de brillance et de force colorante sur films secs :**

L'opacité représente le pouvoir couvrant d'une peinture. L'opacité, mesurée à l'aide d'un spectrophotomètre Dr. Lange et selon les instructions du fabriquant, est tout à fait acceptable pour chacune des formulations et, dans chaque cas, est supérieure à 95%.

La brillance reflète la capacité d'une surface à réfléchir la lumière sans la diffuser. Il n'est pas observé de différence entre les différentes formulations, dont la brillance à 60° est inférieure à 10, telle que mesurée sur appareil Trio™ de Novo Glass.

La force colorante (développement de la couleur) est évaluée sur la base des concentrés pigmentaires bleus phtalocyanine, ajoutés dans chacune des formulations de peintures. Les tests effectués ici mettent en évidence le pouvoir dispersant de chacun des agents de neutralisations indiqués *supra.*

Dans chaque cas, on évalue le développement de la couleur dans les conditions expérimentales suivantes :

- L'évaluation du développement de la couleur d'une base blanche teintée est assurée par dépôt humide sous 200 μm sur cartes de contraste LENETA 2A standard (The LENETA COMPANY, USA).
- Ces cartes de contraste, après un séchage de 24 heures, sont examinées visuellement et mesurées à l'aide d'un spectrophotomètre Dr. Lange.
- Les mesures de couleur sont effectuées sur un spectrophotomètre Dr. Lange, en mode spéculaire inclus, mesure en réflexion, ouverture de mesure 8 mm, émission UV 100%, Luminance d/8 (Diffusion à 8° par rapport à l'axe de l'éclairage).
- Les valeurs sont la moyenne de trois mesures prises sur les cartes de contraste. Les valeurs L , a*, b* et ΔE* reportées dans le Tableau 4 suivant sont les coordonnées de l'espace couleur selon CIELAB et sont décrites dans la norme DIN 6174 ainsi qu'explicitées dans « BASF Handbook on Basics of Coating Technology » des auteurs Goldschmidt et Streitberger aux Editions Vincents, publié en 2003, pages 360 à 372. Pour mémoire, il est rappelé que :

  L* représente l'indice de blanc compris entre 0 (noir) et 100 (blanc) ;
  a* représente l'indice de rouge compris entre -100 (vert) et +100 (rouge) ;
  b* représente l'indice de jaune compris entre -100 (bleu) et +100 (jaune).

La valeur E* est calculée selon l'équation : $E^* = \sqrt{a^{*2} + b^{*2} + L^{*2}}$.

Le Tableau 3 figuré plus haut présente trois (3) exemples (1 illustrant la présente invention, et deux comparatifs) de peintures teintées en bleu et qui ont été soumises aux mesures de couleur décrites ci-dessus ; les résultats de ces mesures (valeurs spectrophotométriques) sont rapportés dans le Tableau 4 ci-après.

-- Tableau 4 --

| Résultats des mesures de développement de la couleur des peintures | | | | |
|---|---|---|---|---|
| **Exemple** | **L*** | **a*** | **b*** | |
| **1** | 60,99 | -14,54 | -31,16 | |
| | Δ**L*** (par rapport à Ex. 1) | Δ**a*** (par rapport à Ex. 1) | Δ**b*** (par rapport à Ex. 1) | Δ**E*** (par rapport à Ex. 1) |
| 2 | -0,75 | -0,69 | -2,10 | 2,33 |
| 3 | -1,19 | -0,67 | -2,09 | 2,50 |

Il ressort du Tableau 4 que les formulations des exemples 2 et 3 présentent un développement de la force colorante plus importante que la formulation de l'exemple 1.

En outre, le ΔE* de l'exemple 3 est plus important que celui de l'exemple 2, indiquant ainsi un meilleur développement de la couleur. Ceci est corroboré par une observation visuelle des films. Les films préparés à partir de la formulation de l'exemple 3 sont plus homogènes que ceux préparés à partir de la formulation de l'exemple 1, mais aussi que ceux préparés à partir de la formulation de l'exemple 2, dans lesquels on peut observer la présence de grains et de traces bleues plus foncées.

## Revendications

1. Utilisation, comme agent de neutralisation et/ou de co-dispersion dans une peinture et/ou comme agent de développement de la force colorante de pigment(s) dans une base de peinture blanche que l'on souhaite teinter, d'au moins une amine secondaire ou tertiaire hydroxylée de formule (1) :

$$N(R^1)(R^2)(R^3) \quad (1)$$

dans laquelle, $R^1$, $R^2$ et $R^3$, identiques ou différents, sont choisis parmi l'atome d'hydrogène, un radical alkyle linéaire ou ramifié comprenant de 1 à 12 atomes de carbone et un radical hydroxy-alkyle linéaire comprenant de 1 à 6 atomes de carbone,
étant entendu que :

   - au plus un des $R^1$, $R^2$ et $R^3$ représente l'atome d'hydrogène,
   - au moins un des $R^1$, $R^2$ et $R^3$ comporte un groupement hydroxyle (-OH), et
   - au moins un des $R^1$, $R^2$ et $R^3$ comporte au moins une ramification en position $\alpha$ de l'atome d'azote.

2. Utilisation selon la revendication 1, dans laquelle $R^1$ représente l'atome d'hydrogène et $R^2$ et $R^3$, identiques ou différents, sont choisis parmi un radical alkyle linéaire ou ramifié comprenant de 1 à 12 atomes de carbone et un radical hydroxy-alkyle linéaire comprenant de 1 à 6 atomes de carbone,
étant entendu que :

   - au moins un des $R^2$ et $R^3$ comporte un groupement hydroxyle (-OH), et
   - au moins un des $R^2$ et $R^3$ comporte au moins une ramification en position $\alpha$ de l'atome d'azote.

3. Utilisation selon la revendication 1, dans laquelle chaque radical alkyle comporte de 3 à 10 atomes de carbone, de préférence de 3 à 8 atomes de carbone.

4. Utilisation selon la revendication 1, dans laquelle le radical porteur d'un groupement hydroxyle comporte 2 ou 3, de préférence encore 2, atomes de carbone.

5. Utilisation selon la revendication 1, dans laquelle $R^1$ représente l'atome d'hydrogène et $R^2$ et $R^3$, identiques ou différents, sont choisis parmi un radical alkyle linéaire ou ramifié comprenant de 3 à 8 atomes de carbone et un radical hydroxy-alkyle linéaire comprenant 2 ou 3, de préférence 2, atomes de carbone,
étant entendu que :

   - au moins un des $R^2$ et $R^3$ comporte un groupement hydroxyle (-OH), et
   - au moins un des $R^2$ et $R^3$ comporte au moins une ramification en position $\alpha$ de l'atome d'azote.

6. Utilisation selon l'une quelconque des revendications 1 à 5, dans laquelle l'au moins une amine est choisie parmi :

   - la N-(1-méthylpropyl)-N-(2-hydroxyéthyl)amine ;
   - la N-(1,3-diméthylbutyl)-N-(2-hydroxyéthyl)amine ; et
   - la N-(1-éthyl-3-méthylpentyl)-N-(2-hydroxyéthyl)amine.

7. Utilisation selon l'une quelconque des revendications précédentes, dans laquelle la peinture est une peinture pigmentée aqueuse ou solvantée.

8. Utilisation selon l'une des revendications précédentes, dans laquelle la peinture est une peinture pigmentée, le ou les pigments étant introduits dans la formulation par dilution d'un concentré pigmentaire dans une base de peinture blanche, ledit concentré pigmentaire contenant en outre un dispersant primaire, de l'eau et les additifs et adjuvants usuels.

9. Concentré pigmentaire comprenant au moins une amine de formule (1) selon l'une des revendications 1 à 6, un dispersant primaire, un ou plusieurs pigments, de l'eau et un ou plusieurs additifs et adjuvants usuels.

10. Concentré pigmentaire selon la revendication 9, comprenant de 0,05 à 10% en poids d'au moins une amine de formule (1) selon l'une quelconque des revendications 1 à 6.

11. Concentré pigmentaire selon la revendication 9 ou la revendication 10, comprenant en outre un ou plusieurs autres agents de neutralisation, notamment choisi(s) parmi l'ammoniaque, l'hydroxyde de sodium, la diméthylamine, la monoéthanolamine, la diéthanolamine, la N-méthyléthanolamine, le 2-amino-2-méthyl-1-propanol, et le 2-n-butylaminoéthanol, la quantité d'amine(s) de formule (1) représentant au moins 1 % en poids, de préférence au moins 50% en poids du mélange des agents de neutralisation.

12. Peinture aqueuse ou solvantée comprenant de 0,05 à 2% en poids, de préférence de 0,1 à 0,5% en poids, et de façon encore plus préférée de 0,1 à 0,2% en poids d'au moins une amine de formule (1) selon l'une quelconque des revendications 1 à 6 comme agent de neutralisation et/ou agent de co-dispersion dans la peinture et/ou comme agent de développement de la force colorante de pigment(s).

13. Peinture selon la revendication 12, comprenant en outre un ou plusieurs autres agents de neutralisation, notamment choisi(s) parmi l'ammoniaque, l'hydroxyde de sodium, la diméthylamine, la monoéthanolamine, la diéthanolamine, la N-méthyléthanolamine, le 2-amino-2-méthyl-1-propanol, et le 2-n-butylaminoéthanol, la quantité d'amine(s) de formule (1) représentant au moins 1 % en poids, de préférence au moins 50% en poids du mélange des agents de neutralisation.

**Patentansprüche**

1. Verwendung eines hydroxylierten, sekundären oder tertiären Amins der folgenden Formel (1) als Neutralisationsmittel und/oder Codispergiermittel in einem Anstrichstoff und/oder als Mittel zur Bildung der Farbstärke von Pigment (en) in einer weißen Farbgrundmasse, die gefärbt werden soll:

$$R^3-N(R^1)-R^2 \quad (1)$$

worin $R^1$, $R^2$ und $R^3$, die gleich oder verschieden sind, unter einem Wasserstoffatom, einer linearen oder verzweigten Alkylgruppe mit 1 bis 12 Kohlenstoffatomen und einer linearen Hydroxyalkylgruppe mit 1 bis 6 Kohlenstoffatomen ausgewählt sind, mit der Maßgabe, dass:

- zumindest eine der Gruppen $R^1$, $R^2$ und $R^3$ ein Wasserstoffatom bedeutet,
- zumindest eine der Gruppen $R^1$, $R^2$ und $R^3$ eine Hydroxygruppe (-OH) trägt, und
- zumindest eine der Gruppen $R^1$, $R^2$ und $R^3$ zumindest eine Verzweigung in $\alpha$-Stellung zum Stickstoffatom aufweist.

**2.** Verwendung nach Anspruch 1, worin $R^1$ ein Wasserstoffatom bedeutet und $R^2$ und $R^3$, die gleich oder verschieden sind, untereiner linearen oder verzweigten Alkylgruppe mit 1 bis 12 Kohlenstoffatomen und einer linearen Hydroxyalkylgruppe mit 1 bis 6 Kohlenstoffatomen ausgewählt sind,
mit der Maßgabe, dass:

- zumindest eine der Gruppen $R^2$ und $R^3$ eine Hydroxygruppe (-OH) trägt, und
- zumindest eine der Gruppen $R^2$ und $R^3$ zumindest eine Verzweigung in $\alpha$-Stellung zum Stickstoffatom aufweist.

**3.** Verwendung nach Anspruch 1, worin die Alkylgruppen jeweils 3 bis 10 Kohlenstoffatome und vorzugsweise 3 bis 8 Kohlenstoffatome aufweisen.

**4.** Verwendung nach Anspruch 1, worin die Gruppe, die eine Hydroxygruppe trägt, 2 oder 3 und noch bevorzugter 2 Kohlenstoffatome aufweist.

**5.** Verwendung nach Anspruch 1, worin $R^1$ ein Wasserstoffatom bedeutet und $R^2$ und $R^3$, die gleich oder verschieden sind, untereiner linearen oder verzweigten Alkylgruppe mit 3 bis 8 Kohlenstoffatomen und einer linearen Hydroxyalkylgruppe mit 2 oder 3 und vorzugsweise 2 Kohlenstoffatomen ausgewählt sind,
mit der Maßgabe, dass:

- zumindest eine der Gruppen $R^2$ und $R^3$ eine Hydroxygruppe (-OH) trägt, und
- zumindest eine der Gruppen $R^2$ und $R^3$ zumindest eine Verzweigung in $\alpha$-Stellung zum Stickstoffatom aufweist.

**6.** Verwendung nach einem der Ansprüche 1 bis 5, worin zumindest ein Amin ausgewählt ist unter:

- N-(1-Methylpropyl)-N-(2-hydroxyethyl)amin;
- N-(1,3-Dimethylbutyl)-N-(2-hydroxyethyl)amin;
- N-(1-Ethyl-3-methylpentyl)-N-(2-hydroxyethyl)amin.

**7.** Verwendung nach einem der vorhergehenden Ansprüche, worin der Anstrichstoff ein pigmentierter, wässriger oder lösemittelhaltiger Anstrichstoff ist.

**8.** Verwendung nach einem der vorhergehenden Ansprüche, worin der Anstrichstoff ein pigmentierter Anstrichstoff ist, wobei das Pigment oder die Pigmente in die Formulierung unter Verdünnen eines Pigmentkonzentrats in eine weiße Farbgrundmasse eingebracht werden und wobei das Pigmentkonzentrat ferner ein primäres Dispergiermittel, Wasser und herkömmliche Additive und Adjuvantien enthält.

**9.** Pigmentkonzentrat, das mindestens ein Amin der Formel (1) nach einem der Ansprüche 1 bis 6, ein primäres Dispergiermittel, ein oder mehrere Pigmente, Wasser und ein oder mehrere herkömmliche Additive und Adjuvantien enthält.

**10.** Pigmentkonzentrat nach Anspruch 9, das 0,05 bis 10 Gew.-% mindestens eines Amins der Formel (1) nach einem der Ansprüche 1 bis 6 enthält.

**11.** Pigmentkonzentrat nach Anspruch 9 oder Anspruch 10, das ferner ein oder mehrere weitere Neutralisationsmittel enthält, das (die) insbesondere unter Ammoniak, Natriumhydroxid, Dimethylamin, Monoethanolamin, Diethanolamin, N-Methylethanol-amin, 2-Amino-2-methyl-1-propanol und 2-n-Butylaminoethanol ausgewählt ist (sind), wobei der Mengenanteil an Amin(en) der Formel (1) mindestens 1 Gew.-% und vorzugsweise mindestens 50 Gew.-% des Gemisches der Neutralisationsmittel ausmacht.

**12.** Wässriger oder lösemittelhaltiger Anstrichstoff, der 0,05 bis 2 Gew.-%, vorzugsweise 0,1 bis 0,5 Gew.-% und noch bevorzugter 0,1 bis 0,2 Gew.-% zumindest eines Amins der Formel (1) nach einem der Ansprüche 1 bis 6 als Neutralisationsmittel und/oder Codispergiermittel in einem Anstrichstoff und/oder als Mittel zur Bildung der Farbstärke von Pigment(en) enthält.

**13.** Anstrichstoff nach Anspruch 12, der ferner ein oder mehrere weitere Neutralisationsmittel enthält, das (die) insbesondere unter Ammoniak, Natriumhydroxid, Dimethylamin, Monoethanolamin, Diethanolamin, N-Methylethanolamin, 2-Amino-2-methyl-1-propanol und 2-n-Butylaminoethanol ausgewählt ist (sind), wobei der Mengenanteil an Amin(en) der Formel (1) mindestens 1 Gew.-% und vorzugsweise mindestens 50 Gew.-% des Gemisches der Neutralisationsmittel ausmacht.

**Claims**

**1.** Use of at least one secondary or tertiary hydroxylated amine as a neutralisation and/or co-dispersion agent in a paint and/or as an agent for enhancing the colouring power of one or more pigments in a white paint base to be coloured, said amine being of the formula (1):

$$R^3-N(R^1)-R^2 \quad (1)$$

wherein $R^1$, $R^2$ and $R^3$, which are identical or different, are selected from the hydrogen atom, a linear or branched alkyl radical comprising 1 to 12 carbon atoms and a linear hydroxy alkyl radical comprising 1 to 6 carbon atoms, it being understood that:

- a maximum of one of $R^1$, $R^2$ and $R^3$ represents the hydrogen atom,
- at least one of $R^1$, $R^2$ and $R^3$ contains a hydroxyl (-OH) group, and
- at least one of $R^1$, $R^2$ and $R^3$ contains at least one branch in the $\alpha$ position of the nitrogen atom.

**2.** Use according to claim 1, wherein $R^1$ represents the hydrogen atom and $R^2$ and $R^3$, which are identical or different, are selected from a linear or branched alkyl radical comprising 1 to 12 carbon atoms and a linear hydroxy alkyl radical comprising 1 to 6 carbon atoms, it being understood that:

- at least one of $R^2$ and $R^3$ contains a hydroxyl (-OH) group, and
- at least one of $R^2$ and $R^3$ contains at least one branch in the $\alpha$ position of the nitrogen atom.

**3.** Use according to claim 1, wherein each alkyl radical comprises 3 to 10 carbon atoms, preferably 3 to 8 carbon atoms.

**4.** Use according to claim 1, wherein the radical carrying a hydroxyl group contains 2 or 3, preferably 2, carbon atoms.

**5.** Use according to claim 1, wherein $R^1$ represents the hydrogen atom and $R^2$ and $R^3$, which are identical or different, are selected from a linear or branched alkyl radical comprising 3 to 8 carbon atoms and a linear hydroxy alkyl radical comprising 2 or 3, preferably 2, carbon atoms, it being understood that:

- at least one of $R^2$ and $R^3$ contains a hydroxyl (-OH) group, and
- at least one of $R^2$ and $R^3$ contains at least one branch in the $\alpha$ position of the nitrogen atom.

**6.** Use according to one of claims 1 to 5, wherein at least one amine is selected from:

- N-(1-methylpropyl)-N-(2-hydroxyethyl)amine;
- N-(1,3-dimethylbutyl)-N-(2-hydroxyethyl)amine; and
- N-(1-ethyl-3-methylpentyl)-N-(2-hydroxyethyl)amine.

7. Use according to one of the preceding claims, wherein the paint is a pigmented aqueous or solvent-containing paint.

8. Use according to one of the preceding claims, wherein the paint is a pigmented paint, the pigment(s) being introduced into the composition by diluting a pigment concentrate in a white paint base, said pigment concentrate furthermore containing a primary dispersant, water and the typical additives and adjuvants.

9. Pigment concentrate comprising at least one amine of formula (1) according to one of claims 1 to 6, a primary dispersant, one or more pigments, water and one or more typical additives and adjuvants.

10. Pigment concentrate according to claim 9, comprising 0.05 to 10% b.w. of at least one amine of formula (1) according to one of claims 1 to 6.

11. Pigment concentrate according to claim 9 or claim 10, furthermore comprising one or more further neutralisation agents, specifically those selected from ammonia, sodium hydroxide, dimethylamine, monoethanolamine, diethanolamine, N-methylethanolamine, 2-amino-2-methyl-1-propanol and 2-n-butylaminoethanol, the quantity of amine(s) of formula (1) representing at least 1% b.w., preferably at least 50% b.w. of the mixture of the neutralisation agents.

12. Aqueous or solvent-containing paint comprising 0.05 to 2% b.w., preferably 0.1 to 0.5% b.w. and particularly preferably 0.1 to 0.2% b.w. of at least one amine of formula (1) according to one of claims 1 to 6 as a neutralisation and/or co-dispersion agent in a paint and/or as an agent for enhancing the colouring power of one or more pigments.

13. Paint according to claim 12, furthermore comprising one or more other neutralisation agents, specifically those selected from ammonia, sodium hydroxide, dimethylamine, monoethanolamine, diethanolamine, N-methylethanolamine, 2-amino-2-methyl-1-propanol and 2-n-butylaminoethanol, the quantity of amine(s) of formula (1) representing at least 1% b.w., preferably at least 50% b.w. of the mixture of the neutralisation agents.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5959001 A

### Littérature non-brevet citée dans la description

- **GOLDSCHMIDT ; STREITBERGER.** BASF Handbook on Basics of Coating Technology. 2003, 360-372